# EUROPEAN PATENT SPECIFICATION

(11) **EP 3 436 731 B1**
(45) Date of publication and mention of the grant of the patent: **12.02.2020**
(21) Application number: 17714529.9
(22) Date of filing: 22.03.2017
(51) Int. Cl.: F16L 37/098, F24F 13/02

(54) **A SYSTEM FOR CONNECTING TWO VENTILIATION DUCT SECTIONS TO EACH OTHER**
SYSTEM ZUM VERBINDEN ZWEIER LÜFTUNGSROHRABSCHNITTE MITEINANDER
SYSTÈME POUR RELIER DEUX SECTIONS DE CONDUIT DE VENTILATION L'UNE À L'AUTRE

(30) Priority: 31.03.2016 GB 201605425
(43) Date of publication of application: 06.02.2019
(73) Proprietor: Verplas Limited, Blackhill, Verwood, Dorset BH31 6HA (GB)
(72) Inventor: ARMSTRONG, Ken, Verwood Dorset BH31 6HA (GB)
(74) Representative: Grey, Ian Michael
(86) International application number: PCT/GB2017/050806
(87) International publication number: WO 2017/168123

(56) References cited:
- EP-A1- 2 759 779
- FR-A1- 2 812 371
- US-A- 4 887 849
- US-A1- 2006 237 967
- US-B1- 7 393 021

## Description

According to the invention there is provided a system for connecting two ventilation duct sections to each other in end-to-end abutting relation to form a continuous conduit for the passage of air. Also according to the invention there is provided a first ventilation duct section and a second ventilation duct section.

Ventilation ducting provides a conduit for transmitting air, predominantly for ventilating buildings by transferring air to and from a fan unit or mechanical ventilation and heat recovery unit.

Ventilation ducting is provided in sections that are joined together to create a conduit of the desired length and geometric configuration. These sections usually comprise straight lengths and fittings such as 90° bends, tee-pieces and plenums.

Each duct section is formed of a plastic body sheathed in a layer of insulating material such as mineral wool, aluminium coated bubble foil or expanded polystyrene. The thermal insulation reduces the rate of heat transfer across the body wall to better control the temperature of the air inside the ducting and to prevent the formation of condensation on the outside, or on the inside, of the body wall.

The sections are joined together by plain mating surfaces, for example two sections may be push fitted together to form a join that holds the two sections together by simple interference between the mating surfaces. The joins are coated in sealant and wrapped in duct tape to minimise air ingress when the pressure in the duct is less than ambient, or leakage when the pressure in the duct is greater than ambient.

Duct sections are sometimes disassembled in order to give access for maintenance. This requires the tape to be removed from around the joins before the individual sections can be pulled apart. Often the joins can be difficult to separate due to the interference of the mating surfaces and the layers of duct tape and sealant that have to be removed. 1 The duct tape and sealant must be re-applied when remaking the join.

Documents US 7 393 021 B1, US 4 887 849 A, FR 2 812 371 A1 and US 2006/237967 A1 each disclose a system for connecting two duct sections to each other by means of a snap action.

It is an object of the invention to provide a connecting mechanism for sections of ventilation ducting that substantially alleviates the problems mentioned above. According to the present invention there is provided a system for connecting two ventilation duct sections to each other in end-to-end abutting relation to form a continuous conduit for the passage of air between said sections, the system comprising the features according to claim 1. Further preferred embodiments are defined in the dependent claims.

The hub comprises an inner peripheral edge and the ramp comprises an inclined surface leading up to said edge.

Therefore as the spigot is inserted into the hub the inclined surface engages the spigot so that the relative axial motion of the hub and spigot creates a radial force that compresses the spigot.

The spigot has a leading edge and the lip is formed at said leading edge.

The spigot has a leading edge and a series of spaced protrusions may extend from the leading edge, the lip being formed at a tip of each protrusion.

Therefore the spaced protrusions create a resiliently deformable part of the spigot.

The system comprises a sealing member mounted to the hub and configured to form a seal against a surface of the spigot when the spigot is inserted into the hub.

Therefore no duct tape or sealant is required and the duct sections are simply assembled.

The system may comprise a recess in the hub to receive the sealing member.

The system may comprise a retaining element attachable to the hub to retain the sealing member in the recess.

The sealing member may comprise a domed section to make initial contact with the spigot when the spigot is inserted into the hub and, a flange section that is deflected by the spigot on further insertion of the spigot into the hub.

The spigot may have a mounting portion configured to extend into a ventilation duct section to mount the spigot thereto.

Said mounting portion may be separated from a remaining portion of the spigot that is configured to be inserted into the hub by a radially extending flange that seats against an end face of a ventilation duct section into which said portion extends.

Therefore the spigot is easily mountable within a duct section by push fitting the mounting portion of the spigot into the open end of the duct section up to the radially extending flange.

The system may further comprise duct sections made from expanded polystyrene foam.

Therefore the duct is formed from an insulating material and does not require an additional insulating sleeve or jacket.

The mounting portion may comprise barb elements to engage a ventilation duct section in which said mounting portion extends.

The hub may have barb elements to engage a ventilation duct section in which said hub is mountable.

Therefore the barb elements bite into the expanded polystyrene foam of the duct section to prevent the hub and or the spigot from being removed.

The spigot and the hub may be configured so that, when the spigot is received in the hub with the lip located behind the ramp, the duct sections are squeezed together in end-to-end abutting relation.

Therefore the duct sections tightly abut to maintain a high level of thermal resistance.

Also according to the present invention there is provided an arrangement as defined in claim 11.

The first ventilation duct section and the second ventilation duct section may be made from expanded polystyrene foam.

So that the present invention may be more fully understood embodiments thereof will now be described with reference to the accompanying drawings in which:
Figure 1 shows a system according to the invention;
Figure 2 is a section view of a spigot according to the invention;
Figure 3 is an isometric view of a connector according to the invention;
Figure 4 is a section view of the connector;
Figure 5 is a detail view of the section of the connector;
Figure 6 is a detail view of the section of the spigot.

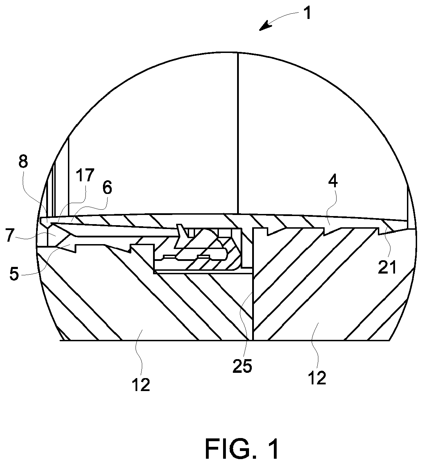

Referring to figure 1, the present invention relates to a system 1 for connecting two ventilation duct sections 12 to each other in end-to-end abutting relation to form a continuous conduit for the passage of air between said sections. The system 1 comprises a resiliently deformable spigot 4 having a lip 8, the spigot 4 being mountable to one ventilation duct section 12 to extend from an open end thereof, and a hub 5 comprising a ramp 15 mountable within an open end of the other ventilation duct section 12. The arrangement being such that when the spigot 4 and the hub 5 are mounted to respective ventilation duct sections 12, the spigot 4 is insertable into the hub 5 so that the lip 8 and the ramp 15 cooperate to resiliently compress the spigot 4. Further insertion of the spigot 4 into the hub 5 causes the lip 8 to pass beyond the ramp 15 so that the spigot 4 expands to locate the lip 8 behind the ramp 15 and connect the ventilation duct sections 12 together.

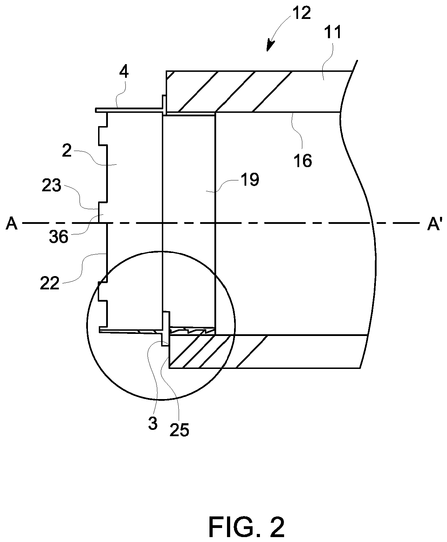

Referring to Figure 2, one end of a duct section 12 is shown in cross section. The illustrated duct section 12 is a straight section, that is, it extends along a straight central axis A-A. Other shape sections are envisaged and may include for example, tee-shape sections, bend pieces and plenums. Regardless of the section geometry, duct sections 12 are formed of a hollow extended body 11 that serves as the conduit for the passage of air.

It is also envisaged that duct sections 12 may be any shape when viewed end on to the axis A-A. For example, the duct sections 12 may for example be circular, square or rectangular. Each duct section 12 is open ended and a spigot 4 or hub 5 is mountable in the open end so that, when the spigot 4 and the hub 5 are mounted to respective ventilation duct sections 12, the spigot 4 is insertable into the hub 5 to connect adjacent duct sections 12 together.

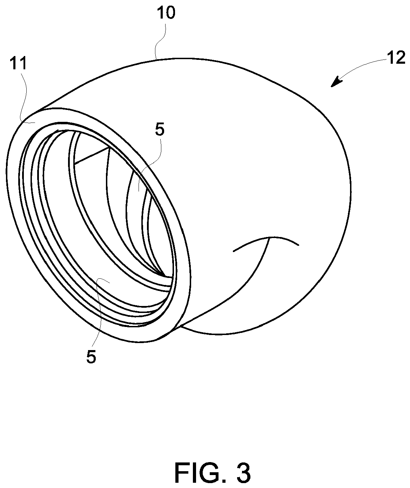

Duct sections 12 can be provided with a spigot 4, a hub 5 or both. For example, duct sections 12 may comprise a spigot 4 at each end of the duct section 12. In such cases the duct sections 12 will include a connector piece 10 that comprises a hub 5 at each end to connect with the spigots 4 of adjacent duct sections 12. A connector 10 is shown in figure 3. In another example, the duct sections 12 may comprise a spigot 4 at one end of the duct and a hub 5 at the other. In this example, the sections are orientated so that a spigot 4 end faces a hub 5 end so that the sections can be connected end to end, hub 5 to spigot 4.

Figure 3 shows a connector 10 piece. The connector piece 10 is a duct section 12 with a hub 5 mounted at each end of the duct section 12. The connecter 10 is provided to connect two duct sections 12 together which have a spigot 4 at either end. The illustrated connector 10 has an axis that extends through an angle so that connected duct sections 12 extend in different directions. However, connectors 10 according to the invention are not limited in this way and the axis may take any path that is required, for example the connector 10 could equally have a straight axis to connect duct sections 12 along a straight path.

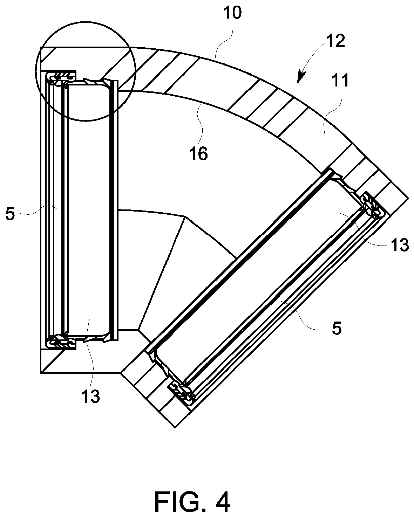

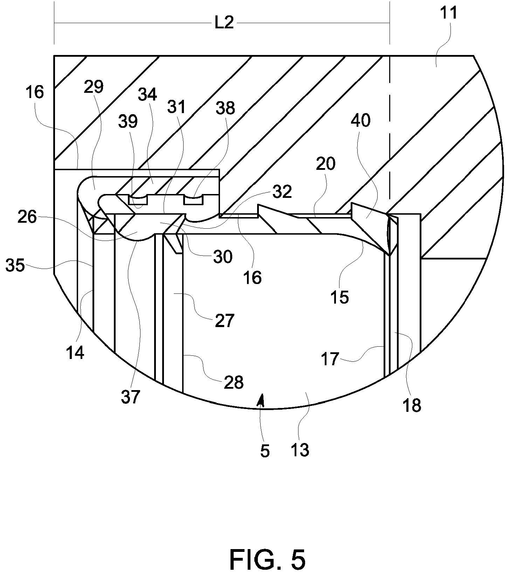

Figures 4 and 5 show a hub 5 mounted within a duct section 12 of a connector 10. It can be seen that each hub 5 comprises an insert 13 shaped to fit into an open end of the body 11 of the duct section 12. The inserts 13 are the same shape as the duct section 12 when viewed end on to its axis and are sized so that they fit tightly around the perimeter of its inner surface 16. The inserts 13 extend axially into the duct section 12 to define an overlap region into which a spigot 4 of an adjacent duct section 12 is fitted. The insert 13 may comprise barb elements 40 depending from its outer surface 20 to grip the inner surface 16 of the body 11 of the duct section 12 and retain it therein.

The hubs 5 have a leading edge 14 which is disposed adjacent the opening and which lies substantially flush with the inner surface 16 of the duct so that it does not obstruct the spigot 4 as it is being inserted into the hub 5.

The hub 5 inserts 13 comprise a ramp section 15 that extends into the overlap region. The ramp section 15 provides an inclined surface in the opening of the duct section 12 that gradually extends away from the duct section 12 body's 11 inner surface 16 with distance along the central axis. The inclined surface leads up to an inner peripheral edge 17 of the hub 5 where the ramp section 15 terminates. A back surface 18 of the hub 5 depends from the inner peripheral edge 17 and extends obliquely to the inner surface 16.

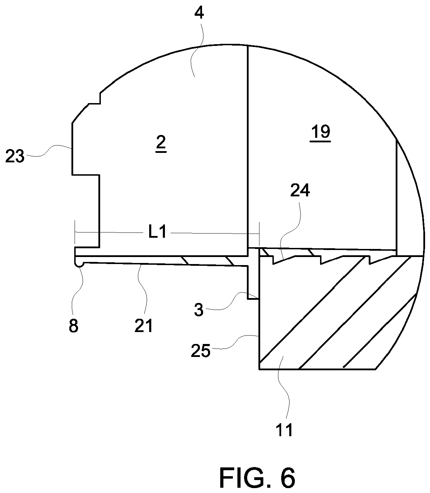

Referring to figures 2 and 6, a spigot 4 is shown mounted in an open end of a duct section 12. The spigot 4 comprises a mounting portion 19 which fits into the end the body 11 of the duct. The mounting portion 19 is the same shape as the duct section 12 when viewed end on to its axis and is sized so that it fits tightly around the perimeter of the duct section's 12 inner surface 16. The mounting portion 19 extends axially into the duct section 12 and may comprise barb elements 24 that extend from its outer surface 21 to grip the inner surface 16 of the body 11 of the duct section 12 and retain it thereto.

A remaining portion 2 of the spigot 4 configured to be inserted into the hub 5 extends from the open end of the duct section 12 about the perimeter of the mounting portion 19 to a leading edge 22. The mounting portion 19 is separated from the remaining portion 2 by a radially extending flange 3 provided to seat against an end face 25 of a duct section 12 in which the spigot 4 is inserted. Therefore the spigot 4 is easily mountable into an open end of a duct section 12 by simply inserting the spigot 4 up to the radially extending flange 3. The radially extending flange 3 also ensures that the spigot 4 is mounted concentrically with the duct section 12.

The spigot 4 may extend parallel to the mounting portion 19, or it may extend obliquely thereto so that the outer perimeter at the leading edge 22 is smaller than the perimeter of the opening of the duct sections 12. This allows the leading edge 22 to be more easily located in the hub 5 of an adjacent duct section 12. It shall be appreciated that although the outer perimeter of the leading edge 22 of the spigot 4 may be smaller than the perimeter of the opening of the duct sections 12, it must remain large enough that the leading edge 22 comes into contact with the ramp section 15 of the hub 5 for reasons that will become apparent below.

As shown most clearly in figures 2 and 6, the spigot 4 comprises a series of spaced protrusions 36 that extend axially from the leading edge 22. In the illustrated embodiment, the spaced protrusions 36 are evenly spaced around the perimeter of the leading edge 22 so that it is castellated in appearance. The outer most edges 23 of the spaced protrusions 36 comprise a lip 8 on the outer surface 21. The protrusions 36 are resiliently deformable to allow them to be compressed as it is inserted into the hub 5. The wall thickness of the spigot 4 may also be reduced around the leading edge 22 to increase the deformability of the protrusions 36.

In another unillustrated embodiment, the spaced protrusions 36 are omitted and the lip 8 is instead provided around the perimeter of the leading edge 22. In such an embodiment the spigot 4 comprises a number of evenly spaced kerf cuts made axially through the spigot 4 to allow the spigot 4 to be compressed as it is inserted into the hub 5.

When two duct sections 12 are connected, the ducts are axially aligned and the spigot 4 mounted to one duct section 12 is inserted into the hub 5 mounted to an adjacent duct section 12. The leading edge 22 of the spigot 4 passes over the leading edge 14 of the hub 5 and the spigot lip 8 comes into contact with the ramp section 15 of the hub 5 so that the insertion of the spigot 4 causes the leading edge 14 of the spigot 4 to be compressed inwards by the inclined surface of the ramp section 15. Further insertion of the spigot 4 into the hub 5 causes the lip 8 to pass beyond the ramp section 15 so that the spigot 4 expands to locate the lip 8 behind the inner peripheral edge 17 of the ramp section 15. The lip 8 abuts against the back surface 18 of the hub 5 so that the spigot 4 is retained in the hub 5 and the two duct sections 12 are connected together. The action of the spigot 4 lip 8 passing over the inner peripheral edge 17 of the hub 5 creates an audible click which signifies that the two duct sections 12 have been successfully connected. With the two duct sections 12 connected together their end faces 25 abut, as shown in figure 1.

A degree of compression in the spigot 4 remains after the hub 5 and the spigot 4 have been connected. The back surface of the insert 18 is angled such that the compressive force exerted by the hub 5 on the spigot 4 has an axial component that draws the two duct sections 12 together and locks them in place.

The axial length Li of the remaining portion 2 of the spigot 4 is marginally less than the axial distance L2 (figure 5) between the end face 25 of the adjacent duct section 12 and the inner peripheral edge 17 of hub 5. Therefore, when the spigot 4 is received in the hub 5 with the lip 8 located behind the ramp section 15, the duct sections 12 are squeezed together in end-to-end abutting relation to maintain a high level of thermal resistance.

A particular advantage of this system of connecting duct sections 12 is that it is reversible. In other words, two connected adjacent duct sections 12 can be pulled apart on application of sufficient force. This will cause the lip 8 of the spigot 4 to be displaced towards the duct section 12 axis so that it can pass back over the edge 17 of the hub 5.

As best shown in figure 5, a sealing member 26 is provided around the perimeter of the leading edge 14 of the hub 5 so that the connection made between adjacent duct sections 12 is air tight. The sealing member 26 is a flipper seal, that is, it comprises a resiliently deformable flange section 27 which upstands from the insert 13 to extend into the opening of the duct section 12. When duct sections 12 are connected together, the leading edge 22 of the spigot 4 displaces the flange section 27 and a tip 28 of the flange section 27 contacts the outer surface 21 of the spigot 4 to make the connection airtight.

The sealing member 26 further comprises a domed section 37. The domed section 37 is disposed closer to the leading edge 14 of the hub 5 than the flange section 27 so that the spigot 4 first contacts the domed section 37 on insertion into the hub 5. The domed section 37 presents a rounded surface which assists in smoothly guiding the leading edge of the spigot toward the ramp section 15.

It will be appreciated that the sealing member 26 negates the need for duct tape and sealant and therefore makes the assembly of duct sections 12 easier than conventional systems.

In the illustrated embodiment the sealing member 26 is attached to the insert 13 by a retaining element 29 that is shaped to insert over the sealing member 26 where it contacts the insert 13. The sealing member 26 comprises a base part 30 and the insert 13 comprises a recess 31 adjacent the leading edge 14 to accommodate the base part 30 of the sealing member 26. The sealing member 26 has an inner bevelled edge 32, which locates under a corresponding edge of the recess 31 in the insert 13, and an outer bevelled edge 33, which locates under the retaining element 29. Specifically, a retaining wall 35 of the retaining element 29 extends into the opening to overlap the outer bevelled edge 33 of the sealing member 26. Therefore the sealing member 26 is locked between the retaining element 29 and the insert 13.

The wall thickness of the duct section 12 is reduced at the opening to enlarge the opening. This provides a gap between the insert 13 and the inner surface 16 of the duct section 12 into which a portion 34 of the retaining element 29 can be inserted when the hub 5 is assembled. Said portion 34 of the retaining element 29 extends around the inner surface 16 of the opening between the duct section 12 and the insert 13 and is tightly fitted to retain the retaining element 29 in the duct section 12. In the illustrated embodiment said portion 34 further comprises ribs 38 arranged around its inner surface that locate in corresponding grooves 39 in the outer surface 20 of the insert 13 when the retaining element 29 is fitted between the insert 13 and the duct section 12. The ribs 38 help keep the retaining element 29 located within the duct section 12.

The body 11 of each duct section 12 is manufactured from expanded polystyrene foam with a graphite additive. This material has a minimum density of 25 kg/m³ and maximum thermal conductivity of 0.3 W/mK such that at 20mm thickness, the insulation material forming the duct wall has a minimum thermal resistance of 0.666 m²K/W. Therefore, the duct section body 11 is formed from insulation material and does not require an additional insulating sleeve or jacket.

## Claims

1. A system (1) for connecting two ventilation duct sections (12) to each other in end-to-end abutting relation to form a continuous conduit for the passage of air between said sections, the system comprising a resiliently deformable spigot (4) having an outer surface (21), a leading edge (22), and an outwardly directed lip (8) formed at said leading edge, the spigot being mountable to one ventilation duct section (12) to extend from an open end thereof, and a hub (5) mountable within an open end of the other ventilation duct section (12), the hub comprising a leading edge (14), an inner peripheral edge (17), and a ramp (15) comprising an inwardly directed inclined surface leading up to said inner peripheral edge (17), wherein a sealing member (26) is mounted to said hub around the perimeter of the leading edge (14) of the hub (5), the sealing member (26) configured to form a seal against the outer surface (21) of the spigot (4) when the spigot (4) is inserted into the hub (5), the arrangement being such that when the spigot and the hub are mounted to respective ventilation duct sections and the spigot is inserted into the hub, the sealing member (26) contacts the outer surface (21) of the spigot before the lip (8) cooperates with the inwardly directed inclined surface of the ramp (15) to resiliently compress the spigot, further insertion of the spigot into the hub causing the lip (8) to pass beyond the ramp (15) so that the spigot expands to locate the lip behind the ramp and connect the ventilation duct sections together.

2. A system according to claim 1, wherein a series of spaced protrusions (36) extend from the leading edge of the spigot, the lip being formed at a tip of each protrusion.

3. A system according to any preceding claim, comprising a recess (31) in the hub to receive the sealing member.

4. A system according to claim 3, comprising a retaining element (29) attachable to the hub to retain the sealing member in the recess.

5. A system according to any preceding claim, wherein the sealing member comprises a domed section (37) to make initial contact with the spigot when the spigot is inserted into the hub and, a flange section (27) that is deflected by the spigot on further insertion of the spigot into the hub.

6. A system according to any preceding claim, wherein the spigot has a mounting portion (19) configured to extend into a ventilation duct section to mount the spigot thereto.

7. A system according to claim 6, wherein said mounting portion (19) is separated from a remaining portion (2) of the spigot that is configured to be inserted into the hub by a radially extending flange (3) that seats against an end face of a ventilation duct section into which said portion extends.

8. A system according to claim 6 or 7, wherein said mounting portion (19) comprises barb elements (24) to engage a ventilation duct section in which said mounting portion extends.

9. A system according to any preceding claim, wherein the hub has barb elements (40) to engage a ventilation duct section in which said hub is mountable.

10. A system according to any preceding claim wherein the spigot and the hub are configured so that, when the spigot is received in the hub with the lip located behind the ramp, the duct sections are squeezed together in end-to-end abutting relation.

11. An arrangement comprising a first ventilation duct section (12), a second ventilation duct section (12) and a system (1) for connecting the two ventilation duct sections (12) to each other in end-to-end abutting relation to form a continuous conduit for the passage of air between said sections (12), the system being according to any one of claims 1-10, the spigot being mounted so as to extend from an open end of the first ventilation duct section, the second ventilation duct section having the hub mounted within an open end of said second ventilation duct section.

12. The arrangement according to claim 11, the duct sections (12) being made from expanded polystyrene foam.

## Patentansprüche

1. System (1) zum Verbinden von zwei Lüftungsrohrabschnitten (12) in einer Ende-zu-Ende-Anlagebeziehung miteinander zum Bilden einer kontinuierlichen Rohrleitung für die Passage von Luft zwischen den genannten Abschnitten, wobei das System Folgendes umfasst: einen elastisch verformbaren Zapfen (4) mit einer Außenfläche (21), einer Vorderkante (22) und einer an der genannten Vorderkante ausgebildeten nach außen gerichteten Lippe (8), wobei der Zapfen so an einem Lüftungsrohrabschnitt (12) montiert werden kann, dass er sich von einem offenen Ende davon erstreckt, und eine Nabe (5), die in einem offenen Ende des anderen Lüftungsrohrabschnitts (12) montiert werden kann, wobei die Nabe eine Vorderkante (14), eine innere Umfangskante (17) und eine Rampe (15) aufweist, die eine nach innen gerichtete geneigte Fläche aufweist, die zu der genannten inneren Umfangskante (17) ansteigt, wobei ein Dichtungselement (26) an der genannten Nabe um den Umfang der Vorderkante (14) der Nabe (5) herum montiert ist, wobei das Dichtungselement (26) zum Bilden einer Dichtung an einer Außenfläche (21) des Zapfens (4) konfiguriert ist, wenn der Zapfen (4) in die Nabe (5) eingeführt wird, wobei die Anordnung derart ist, dass, wenn der Zapfen und die Nabe an jeweiligen Lüftungsrohrabschnitten montiert sind und der Zapfen in die Nabe eingeführt wird, das Dichtungselement (26) die Außenfläche (21) des Zapfens kontaktiert, bevor die Lippe (8) mit der nach innen gerichteten geneigten Fläche der Rampe (15) zusammenwirkt, um den Zapfen elastisch zu komprimieren, wobei ein weiteres Einführen des Zapfens in die Nabe bewirkt, dass die Lippe (8) über die Rampe (15) hinaus passiert, so dass sich der Zapfen ausdehnt, um die Lippe hinter der Rampe zu positionieren und die Lüftungsrohrabschnitte miteinander zu verbinden.

2. System nach Anspruch 1, wobei sich eine Serie von beabstandeten Vorsprüngen (36) von der Vorderkante des Zapfens erstreckt, wobei die Lippe an einer Spitze jedes Vorsprungs ausgebildet ist.

3. System nach einem vorherigen Anspruch, das eine Aussparung (31) in der Nabe zum Aufnehmen des Dichtungselements aufweist.

4. System nach Anspruch 3, das ein Halteelement (29) umfasst, das an der Nabe angebracht werden kann, um das Dichtungselement in der Aussparung zu halten.

5. System nach einem vorherigen Anspruch, wobei das Dichtungselement einen gewölbten Abschnitt (37), um einen Anfangskontakt mit dem Zapfen herzustellen, wenn der Zapfen in die Nabe eingeführt wird, und einen Flanschabschnitt (27) aufweist, der beim weiteren Einführen des Zapfens in die Nabe vom Zapfen abgelenkt wird.

6. System nach einem vorherigen Anspruch, wobei der Zapfen einen Montageteil (19) aufweist, der so konfiguriert ist, dass er sich in einen Lüftungsrohrabschnitt erstreckt, um den Zapfen daran zu montieren.

7. System nach Anspruch 6, wobei der genannte Montageteil (19) von einem restlichen Teil (2) des Zapfens, der zum Einführen in die Nabe konfiguriert ist, durch einen radial verlaufenden Flansch (3) getrennt ist, der an einer Endfläche eines Lüftungsrohrabschnitts anliegt, in den sich der genannte Teil erstreckt.

8. System nach Anspruch 6 oder 7, wobei der genannte Montageteil (19) Widerhakenelemente (24) zum Eingreifen in einen Lüftungsrohrabschnitt umfasst, in den sich der genannte Montageteil erstreckt.

9. System nach einem vorherigen Anspruch, wobei die Nabe Widerhakenelemente (40) zum Eingreifen in einen Lüftungsrohrabschnitt hat, in dem die genannte Nabe montiert werden kann.

10. System nach einem vorherigen Anspruch, wobei der Zapfen und die Nabe so konfiguriert sind, dass, wenn der Zapfen in der Nabe mit der Lippe hinter der Rampe befindlich aufgenommen wird, die Rohrabschnitte in einer Ende-an-Ende-Anlagebeziehung zusammengedrückt werden.

11. Anordnung, die einen ersten Lüftungsrohrabschnitt (12), einen zweiten Lüftungsrohrabschnitt (12) und ein System (1) zum Verbinden der beiden Lüftungsrohrabschnitte (12) miteinander in einer Ende-an-Ende-Anlagebeziehung umfasst, um eine kontinuierliche Rohrleitung für die Passage von Luft zwischen den genannten Abschnitten (12) zu bilden, wobei das System einem der Ansprüche 1 bis 10 entspricht, wobei der Zapfen so montiert ist, dass er sich von einem offenen Ende des ersten Lüftungsrohrabschnitts erstreckt, wobei der zweite Lüftungsrohrabschnitt die Nabe in einem offenen Ende des genannten zweiten Lüftungsrohrabschnitts montiert hat.

12. Anordnung nach Anspruch 11, wobei die Rohrabschnitte (12) aus einem expandierten Polystyrolschaum gefertigt sind.

## Revendications

1. Système (1) pour relier deux sections de conduit de ventilation (12) l'une à l'autre dans une relation contiguë bout à bout afin de former un conduit continu pour le passage d'air entre lesdites sections, le système comprenant une partie mâle (4) élastiquement déformable qui possède une surface extérieure (21), un bord avant (22) et une lèvre (8) dirigée vers l'extérieur formée au niveau dudit bord avant, la partie mâle pouvant être montée sur une section de conduit de ventilation (12) de façon à s'étendre depuis une extrémité ouverte de celle-ci, et une partie femelle (5) montable à l'intérieur d'une extrémité ouverte de l'autre section de conduit de ventilation (12), la partie femelle comprenant un bord avant (14), un bord périphérique interne (17) et une rampe (15) qui comprend une surface inclinée dirigée vers l'intérieur menant audit bord périphérique interne (17), dans lequel un élément d'étanchéité (26) est monté sur ladite partie femelle autour du périmètre du bord avant (14) de la partie femelle (5), l'élément d'étanchéité (26) étant configuré pour former un joint contre la surface extérieure (21) de la partie mâle (4) lorsque la partie mâle (4) est introduite dans la partie femelle (5), l'agencement étant tel que, lorsque la partie mâle et la partie femelle sont montées sur des sections de conduit de ventilation respectives et que la partie mâle est introduite dans la partie femelle, l'élément d'étanchéité (26) vient en contact avec la surface extérieure (21) de la partie mâle avant que la lèvre (8) coopère avec la surface inclinée dirigée vers l'intérieur de la rampe (15) afin de comprimer élastiquement la partie mâle, la poursuite de l'introduction de la partie mâle dans la partie femelle faisant passer la lèvre (8) au-delà de la rampe (15) de telle façon que la partie mâle s'élargit pour placer la lèvre derrière la rampe et relier les sections de conduit de ventilation l'une à l'autre.

2. Système selon la revendication 1, dans lequel une série de saillies espacées (36) s'étendent depuis le bord avant de la partie mâle, la lèvre étant formée à une pointe de chaque saillie.

3. Système selon l'une quelconque des revendications précédentes, comprenant un creux (31) dans la partie femelle pour recevoir l'élément d'étanchéité.

4. Système selon la revendication 3, comprenant un élément de retenue (29) fixable à la partie femelle pour retenir l'élément d'étanchéité dans le creux.

5. Système selon l'une quelconque des revendications précédentes, dans lequel l'élément d'étanchéité comprend une section bombée (37) pour établir le contact initial avec la partie mâle lorsque la partie mâle est introduite dans la partie femelle et une section de collerette (27) qui est déviée par la partie mâle lors de la poursuite de l'introduction de la partie mâle dans la partie femelle.

6. Système selon l'une quelconque des revendications précédentes, dans lequel la partie mâle possède une partie de montage (19) configurée pour s'étendre dans une section de conduit de ventilation afin de monter la partie mâle sur celle-ci.

7. Système selon la revendication 6, dans lequel ladite partie de montage (19) est séparée d'une partie restante (2) de la partie mâle qui est configurée pour être introduite dans la partie femelle par une collerette s'étendant radialement (3) qui appuie contre une face d'extrémité d'une section de conduit de ventilation dans laquelle ladite partie s'étend.

8. Système selon la revendication 6 ou la revendication 7, dans lequel ladite partie de montage (19) comprend des éléments à crans (24) pour venir en prise avec une section de conduit de ventilation dans laquelle ladite partie de montage s'étend.

9. Système selon l'une quelconque des revendications précédentes, dans lequel la partie femelle possède des éléments à crans (40) pour venir en prise avec une section de conduit de ventilation dans laquelle ladite partie femelle peut être montée.

10. Système selon l'une quelconque des revendications précédentes dans lequel la partie mâle et la partie femelle sont configurées de telle façon que, lorsque la partie mâle est reçue dans la partie femelle avec la lèvre placée derrière la rampe, les sections de conduit sont serrées l'une contre l'autre dans une relation contiguë bout à bout.

11. Agencement comprenant une première section de conduit de ventilation (12), une deuxième section de conduit de ventilation (12) et un système (1) pour relier les deux sections de conduit de ventilation (12) l'une à l'autre dans une relation contiguë bout à bout afin de former un conduit continu pour le passage d'air entre lesdites sections (12), le système étant selon l'une quelconque des revendications 1 à 10, la partie mâle étant montée de façon à s'étendre depuis une extrémité ouverte de la première section de conduit de ventilation, la deuxième section de conduit de ventilation ayant la partie femelle montée à l'intérieur d'une extrémité ouverte de ladite deuxième section de conduit de ventilation.

12. Agencement selon la revendication 11, les sections de conduit (12) étant faites de mousse de polystyrène expansé.
